(19) Europäisches Patentamt
European Patent Office
Office européen des brevets

(11) **EP 3 584 572 B1**

(12) **EUROPÄISCHE PATENTSCHRIFT**

(45) Veröffentlichungstag und Bekanntmachung des Hinweises auf die Patenterteilung:
**20.12.2023 Patentblatt 2023/51**

(21) Anmeldenummer: **19179867.7**

(22) Anmeldetag: **13.06.2019**

(51) Internationale Patentklassifikation (IPC):
**G01N 29/04** *(2006.01)* **G01N 29/22** *(2006.01)*
**G01N 29/24** *(2006.01)* **G10K 11/00** *(2006.01)*
**G10K 11/26** *(2006.01)*

(52) Gemeinsame Patentklassifikation (CPC):
**G01N 29/043; G01N 29/221; G01N 29/223;**
**G01N 29/2487; G10K 11/004; G10K 11/26;**
G01N 2291/011; G01N 2291/015; G01N 2291/0234;
G01N 2291/0421; G01N 2291/044; G01N 2291/056;
G01N 2291/101; G01N 2291/2698

(54) **PRÜFKOPFZANGE ZUR ULTRASCHALL-RISS-DETEKTION, KIT ZUR ULTRASCHALL-RISS-DETEKTION UND VERWENDUNG DER PRÜFKOPFZANGE ZUR ULTRASCHALL-RISS-DETEKTION**

TEST HEAD FORCEPS FOR ULTRASONIC CRACK DETECTION, KIT FOR ULTRASONIC CRACK PRODUCTION AND USE OF THE TEST HEAD FORCEPS FOR ULTRASONIC CRACK DETECTION

PINCE DE TÊTE DE CONTRÔLE DESTINÉE À LA DÉTECTION DES FISSURES À ULTRASONS, ENSEMBLE DE DÉTECTION DES FISSURES À ULTRASONS ET UTILISATION DE LA PINCE DE TÊTE DE CONTRÔLE DESTINÉE À LA DÉTECTION DES FISSURES À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2018 AT 5010918 U**

(43) Veröffentlichungstag der Anmeldung:
**25.12.2019 Patentblatt 2019/52**

(73) Patentinhaber:
• **Fraunhofer-Gesellschaft zur Förderung der angewandten Forschung e.V.**
**80686 München (DE)**
• **Rüdiger, Harald**
**6006 Luzern (CH)**

(72) Erfinder:
• **Herzog, Thomas**
**01109 Dresden (DE)**
• **Heuer, Henning**
**01109 Dresden (DE)**
• **Rüdiger, Harald**
**6006 Luzern (CH)**

(74) Vertreter: **Pfenning, Meinig & Partner mbB**
**Patent- und Rechtsanwälte**
**Theresienhöhe 11a**
**80339 München (DE)**

(56) Entgegenhaltungen:
DE-A1-102015 219 193   DE-U- 7 024 436
JP-A- S58 216 950   US-A1- 2017 138 908

EP 3 584 572 B1

**Beschreibung**

Es wird eine Prüfkopfzange zur Ultraschall-Riss-Detektion in einem Gegenstand mit mindestens drei Kanten entlang einer Längsachse bereitgestellt. Die Prüfkopfzange enthält einen Zangenkopf, der über ein Gelenk mit zwei Handgriffen verbunden ist und einen Prüfkopf zur Abgabe und Detektion von Ultraschall und einen Vorlaufkeil enthält, wobei eine erste Oberfläche des Vorlaufkeils an dem Prüfkopf anliegt, eine zweite Oberfläche des Vorlaufkeils in einem Winkel $\alpha$ zur ersten Oberfläche des Vorlaufkeils angeordnet ist und die zweite Oberfläche dazu geeignet ist, durch ein Schließen der Prüfkopfzange an eine flache Oberfläche zwischen zwei Kanten des Gegenstands angelegt zu werden. Die Prüfkopfzange erlaubt es, auch im Kantenbereich des Prüflings vorkommende Risse mit einer sehr hohen Sensitivität zu detektieren. Ferner wird ein Kit bereitgestellt und Verwendungen der Prüfkopfzange bzw. des Kits vorgeschlagen.

Die elektrischen Leitungen von elektrisch betriebenen Beförderungsbahnen, wie beispielsweise Züge, Straßenbahnen oder Seilbahnen usw., werden an den jeweiligen Enden mittels sogenannter Pressverbinder miteinander verbunden. Diese Pressverbinder sollen bei einem möglichst geringen elektrischen Widerstand die auftretenden mechanischen Zugspannungen über viele Jahre aushalten. Viele dieser Pressverbinder bestehen daher aus kupferhaltigen Legierungen, welche einen niedrigen ohmschen Widerstand und eine ausreichend große Zugfestigkeit besitzen.

Der Pressverbinder hat gewöhnlich die Form einer länglichen zylindrischen Hülse. Jeweils ein Ende von zwei elektrischen Leitungen (Fahrleitungen) wird in dem Pressverbinder angeordnet und über ein mechanisches Verpressen des Pressverbinders erfolgt ein mechanischer Formschluss der beiden elektrischen Leitungen, wobei ein Zusammenhalt der beiden Fahrleitungsenden erreicht wird.

Durch das Verpressen des Pressverbinders wird der zylindrische Querschnitt des Pressverbinders in eine meist sechseckige Struktur umgeformt. Vom Querschnitt betrachtet kommt es dabei in einer Richtung vom Inneren des Pressverbinders zu den Ecken zur größten Versetzung im Material des Pressverbinders, da mögliche Gleitebenen an diesen "Ecken" aufeinandertreffen. Entlang der Längsachse des Pressverbinders treten diese großen Versetzungen somit an den Kanten des verpressten Pressverbinders auf.

Bereits beim Verpressen, aber auch infolge der wechselnden mechanischen Zugkräfte auf den Pressverbinder im Laufe des Betriebs, entstehen Risse im Pressverbinder meistens im Inneren des Pressverbinders und vergrößern sich mit zunehmender Alterung. Die Risse können sowohl entlang der Längsachse des Pressverbinders als auch radial von der Längsachse nach außen erfolgen. Ein im Inneren des Pressverbinders auftretender Riss kann weder mittels visuell optischer Sichtprüfung, noch durch Messen des Ohmschen Widerstandes des Pressverbinders, erkannt werden. Erst wenn sich der Riss bis zum äußeren Rand des Pressverbinders ausgebreitet hat und dort an die Oberfläche des Pressverbinders tritt, kann er bei genauer Sichtprüfung erkannt werden.

Pressverbinder, z.B. aus einer Kupferlegierung, verbinden die elektrischen Fahrleitungen von elektrischen Beförderungsbahnen mehrere Jahre bis mehrere Jahrzehnte. In den Pressverbindern während diesem Zeitraum auftretende Risse werden meist erst bei routinemäßigen Wartungs- und Instandhaltungsprüfungen erkannt und auch nur dann, falls sich die Risse bis zum äußeren Rand der Pressverbinder ausgebreitet haben. Auch lange Risse entlang der Längsachse der Pressverbinder, die nicht an die Oberfläche des Pressverbinders treten, werden gar nicht detektiert.

Bei gealterten Pressverbindern besteht daher die Gefahr, dass die unerkannten Risse beispielsweise durch eine kurzzeitige, besonders starke Zugbelastung zum Reißen des Pressverbinders führen. Verbindet der Pressverbinder Fahrleitungen von elektrischen Beförderungsbahnen, so kann es zu einer Unterbrechung in der Stromführung auf dem betreffenden Streckenabschnitt und zum Ausfall der Beförderungsbahn kommen.

Bislang ist im Stand der Technik keine Vorrichtung zur nichtzerstörenden Prüfung von Pressverbindern auf Risse im Inneren der Pressverbinder bekannt. Ferner ist es bislang unmöglich, in Pressverbindern Risse im Kantenbereich der Pressverbinder mit einer hohen Detektionssensitivität zu erfassen.

Die JP S58 216950 A offenbart eine Prüfvorrichtung zur Ultraschall-Riss-Detektion in einem kantigen Gegenstand.

Die DE 10 2015 219 193 A1 offenbart eine Prüfeinrichtung zum Prüfen einer Schweißverbindung zweier Bauteile über Ultraschall.

Die US 2017/0138908 A1 offenbart ein Ankerbolzen-Diagnosesystem enthaltend einen Vibrationserfassungsclip, einen Blaserfassungshammer und eine Diagnoseeinheit, wobei die Diagnoseeinheit die Festigkeit des Ankerbolzens in Übereinstimmung damit diagnostiziert, ob ein Verhältnis der Schwingungsleistung zur Schlagfestigkeit höher als ein vorbestimmter Wert ist.

Die DE 70 24 436 U offenbart eine Vorrichtung zur zerstörungsfreien Prüfung von Profilkörpern, insbesondere Sechskantstangen, mit Ultraschall.

Ausgehend hiervon war es die Aufgabe der vorliegenden Erfindung, eine Vorrichtung bereitzustellen, die auf nicht-zerstörerische Art und Weise eine hochsensitive Detektion von Rissen im Inneren eines kantigen Gegenstands (wie einem Pressverbinder) ermöglicht, wobei auch solche Risse detektiert werden sollen, die im Bereich der Kanten des Gegenstands vorkommen.

Die Aufgabe wird gelöst durch die Prüfkopfzange mit den Merkmalen von Anspruch 1, den Kit mit den Merkmalen von Anspruch 9 und die Verwendung mit den Merkmalen von Anspruch 10.

Die abhängigen Ansprüche zeigen vorteilhafte Weiterbildungen auf.

Erfindungsgemäß wird eine Prüfkopfzange zur Ultraschall-Riss-Detektion (d.h. zur Detektion von Rissen mithilfe von Ultraschall) in einem Gegenstand mit mindestens drei Kanten entlang einer Längsachse bereitgestellt Die Prüfkopfzange enthält einen Zangenkopf, der über ein Gelenk mit zwei Handgriffen verbunden ist und ist dadurch gekennzeichnet, dass der Zangenkopf einen Prüfkopf zur Abgabe und Detektion von Ultraschall und einen Vorlaufkeil enthält, wobei eine erste Oberfläche des Vorlaufkeils an dem Prüfkopf anliegt, und eine zweite Oberfläche des Vorlaufkeils in einem Winkel $\alpha$ zur ersten Oberfläche des Vorlaufkeils angeordnet ist und wobei die zweite Oberfläche dazu geeignet ist, durch ein Schließen der Prüfkopfzange an eine flache Oberfläche zwischen zwei Kanten des Gegenstands angelegt zu werden.

Die erfindungsgemäße Prüfkopfzange ermöglicht eine zerstörungsfreie Prüfung, ob sich im Inneren eines Gegenstands mit mindestens drei Kanten, wie beispielsweise einem Pressverbinder für elektrische Fahrleitungen, Risse gebildet haben. Über den Prüfkopf der Prüfkopfzange können Ultraschallwellen in den Gegenstand geleitet werden und diese nach Reflektion durch den Gegenstand wieder detektiert werden (Impuls-EchoVerfahren). Ultraschallwellen breiten sich in unterschiedlichen Medien bzw.

Materialien unterschiedlich schnell aus und werden an Grenzflächen unterschiedlicher akustischer Impedanz teilweise reflektiert. Ein vom Prüfkopf der Prüfkopfzange ausgesendeter Ultraschallimpuls durchquert also den länglichen Gegenstand (Prüfling) und wird nicht nur an der Rückwand des Prüflings, sondern auch an Rissen im Inneren des Prüflings reflektiert. Die reflektierten Ultraschallanteile gelangen anschließend als Fehlerecho oder Rückwandecho zurück zum Prüfkopf, der nun den Ultraschall wieder empfängt.

Für eine Detektion eines Risses mit hoher Detektionssensitivität ist wichtig, dass in den Prüfling geleitete Ultraschallwellen möglichst senkrecht auf den Riss treffen. Denn in diesem Fall werden die Ultraschallwellen auf direktem Weg zurück reflektiert und können vom Prüfkopf mit hoher Signalintensität (d.h. Sensitivität) erfasst werden. Da Risse in einem länglichen Gegenstand mit mindestens drei Kanten (z.B. einem Pressverbinder) insbesondere in einer Ebene von einer Kante des länglichen Gegenstands hin zu einer mittleren Längsachse des länglichen Gegenstands entstehen, ist es somit vorteilhaft, wenn Ultraschall vom Prüfkopf senkrecht zu dieser Ebene in den länglichen Gegenstand eingestrahlt wird. Eine solche senkrechte Einstrahlung zu dieser Ebene durch Anlegen des Prüfkopfes auf Fläche zwischen zwei Kanten des Gegenstands nur dann möglich, wenn diese Fläche parallel zu einer Fläche steht, in der Risse auftreten können. Generell ist dies erst bei Gegenständen mit mindestens sechs Kanten möglich, da bei solchen Gegenständen prinzipiell eine Fläche zwischen zwei Kanten des Gegenstands zu einer Fläche zwischen der Mittelachse und einer weiteren Kante des Gegenstands parallel sein kann.

Es entsteht jedoch bei diesen Körpern ohne Verwendung von Hilfsmitteln der Nachteil, dass nur der Bereich der Riss-anfälligen Fläche, der sich in der Nähe der Mittelachse befindet, mit hoher Sensitivität gemessen werden kann. Der äußere, d.h. kantennahe, Bereich dieser Fläche wird vom Prüfkopf nicht stark mit Ultraschall angestrahlt und reflektiert somit auch keinen Ultraschall, der vom Prüfkopf detektiert werden kann. Die Folge ist, dass Risse in der Nähe der Kanten unerkannt bleiben. Da sich einige Risse von der mittleren Längsachse in Richtung der Kanten ausbreiten ist es somit auch nicht möglich, ein kritisches Anwachsen der Risse innerhalb dieses (kritischen) Bereichs zu detektieren.

Der Vorteil der erfindungsgemäßen Prüfkopfzange ist, dass auch in dem Bereich der Riss-anfälligen Fläche, der sich in der Nähe der Kanten des Gegenstands (z.B. Pressverbinders) befindet, eine Detektion von Rissen mit einer hohen Detektionssensitivität möglich ist. Dies wird dadurch erreicht, indem der Prüfkopf über einen Vorlaufkeil (d.h. in einem bestimmten definierten Winkel $\alpha$, der die Steigung des Vorlaufkeils definiert) auf einer Fläche des länglichen Körpers aufliegt. Durch dieses Hilfsmittel wird der vom Prüfkopf ausgesendete Ultraschall in einem bestimmten, von dem Vorlaufkeil definierten, Winkel $\alpha$ in den Gegenstand eingestrahlt und zudem das Ultraschallecho aus dem Gegenstand in diesem Winkel $\alpha$ detektiert. Anders ausgedrückt kann über das Material des Vorlaufkeils und seine durch den Winkel $\alpha$ definierte Steigung für jeden Gegenstand (Prüfling) die Einstrahlrichtung so eingestellt werden, dass der Ultraschall senkrecht auf die Ebene von der Längsachse des länglichen Gegenstands zu einer Kante des länglichen Gegenstands trifft. Folglich wird eine hochsensitive Detektion von Rissen im gesamten Inneren des Prüflings, d.h. auch im Kantenbereich des Prüflings, ermöglicht.

Die Prüfkopfzange kann dadurch gekennzeichnet sein, dass der Winkel $\alpha$ des Vorlaufkeils folgende Bedingung erfüllt:

$$\sin \alpha = [c(\text{Vorlaufkeil}) / c(\text{Gegenstand})] \cdot \sin \beta$$

wobei

c(Vorlaufkeil): Schallgeschwindigkeit in dem Material des Vorlaufkeils;
c(Gegenstand): Schallgeschwindigkeit in dem Material des Gegenstands;
a: Winkel zwischen erster und zweiter Oberfläche des Vorlaufkeils;

β: Winkel zwischen dem Lot auf der flachen Oberfläche zwischen zwei Kanten des Gegenstandsund dem Lot auf der Fläche, die sich von einer mittleren Längsachse des Gegenstands zu einer der beiden Kanten der flachen Oberfläche des Gegenstands erstreckt.

Mit der Schallgeschwindigkeit in einem Material ist insbesondere die longitudinale Schallgeschwindigkeit (und nicht die transversale Schallgeschwindigkeit) in dem Material bei einer Temperatur von 20 °C gemeint.

Das Material des Vorlaufkeils erfüllt bevorzugt folgende Bedingung:

$$c(\text{Vorlaufkeil}) = (\sin \alpha / \sin \beta) \cdot c(\text{Gegenstand})$$

wobei

c(Vorlaufkeil): Schallgeschwindigkeit in dem Material des Vorlaufkeils;

c(Gegenstand): Schallgeschwindigkeit in dem Material des Gegenstands; und

a: Winkel zwischen erster und zweiter Oberfläche des Vorlaufkeils;

β: Winkel zwischen dem Lot auf der flachen Oberfläche zwischen zwei Kanten des Gegenstands und dem Lot auf der Fläche, die sich von einer mittleren Längsachse des Gegenstands zu einer der beiden Kanten der flachen Oberfläche des Gegenstands erstreckt.

In einer bevorzugten Ausgestaltungsform ist die mittlere Längsachse des Gegenstands eine Längsachse des Gegenstands, die zu den mindestens drei Kanten des Gegenstands, bevorzugt zu allen Kanten des Gegenstands, den gleichen Abstand aufweist. In diesem Fall ist es bevorzugt, wenn der Gegenstand achsensymmetrisch zur Längsachse ist.

Der zur Riss-Detektion herangezogene Gegenstand kann n Kanten aufweisen, wobei n eine ganze Zahl ≥ 3 ist, wobei optional n ≤ 8 ist, und für den Winkel β gilt:

$$\beta = 90° - (180°/n).$$

Da die erfindungsgemäße Prüfkopfzange in dieser Ausgestaltungsform zur Ultraschall-Riss-Detektion in einem solchen Gegenstand geeignet ist, hat die Definition der Prüfkopfzange über den zur Riss-Detektion herangezogenen Gegenstand Auswirkungen auf die strukturelle Gestaltung der Prüfkopfzange. Weist beispielsweise der zur Riss-Detektion herangezogene Gegenstand genau 4 Kanten auf, so muss die Prüfkopfzange zur Ultraschall-Riss-Detektion in bzw. bei einem Gegenstand mit vier Kanten geeignet sein. Der Winkel β, d.h. der Winkel zwischen dem Lot auf der flachen Oberfläche zwischen zwei Kanten des Gegenstands und dem Lot auf der Fläche, die sich von einer mittleren Längsachse des Gegenstands zu einer der beiden Kanten der flachen Oberfläche des Gegenstands erstreckt, muss somit 90° - 180°/4 = 45° betragen. Für den Winkel α des Vorlaufkeils der Prüfkopfzange muss daher gelten: sin α = c(Vorlaufkeil)/c(Gegenstand) · sin 45°, d.h. sin α ≈ c(Vorlaufkeil)/c(Gegenstand) · 0.7071. Anders ausgedrückt bewirkt ein spezifischer Winkel β am zu prüfenden Gegenstand einen spezifischen Winkel α des Vorlaufkeils der Prüfkopfzange, d.h. eine bestimmte Struktur bzw. Form des Vorlaufkeils.

Es wird ferner vorgeschlagen, die erfindungsgemäße Prüfkopfzange zur Ultraschall-Riss-Detektion in einem Gegenstand zu verwenden, wie er hier beschrieben wird.

In einer bevorzugten Ausgestaltungsform weist der zur Riss-Detektion herangezogene Gegenstand

i) drei Kanten auf, wobei β = 30° ist; oder
ii) vier Kanten auf, wobei β = 45° ist; oder
iii) fünf Kanten auf, wobei β = 54° ist; oder
iv) sechs Kanten auf, wobei β = 60° ist.

Besonders bevorzugt weist der Gegenstand sechs Kanten auf, wobei β = 60° ist. Insbesondere ist der zur Riss-Detektion herangezogene Gegenstand achsensymmetrisch in Bezug auf seine mittlere Längsachse.

Der Prüfkopf der Prüfkopfzange kann einen Ultraschallwandler enthalten oder daraus bestehen, bevorzugt einen Einschwinger-Prüfkopf oder einen Gruppenstrahler.

Ferner kann der Prüfkopf dazu konfiguriert sein, Ultraschall mit einer Frequenz von 1 bis 100 MHz, bevorzugt 2 bis 50 MHz, besonders bevorzugt 5 bis 20 MHz, abzugeben und zu detektieren. Insbesondere ist der Prüfkopf der Prüfkopfzange dazu konfiguriert, den Ultraschall gepulst abzugeben. Ferner kann der Prüfkopf dazu konfiguriert sein, nach der Abgabe eines Ultraschallimpulses auf Ultraschallempfang umzuschalten und Ultraschallimpulsechos in Abhängigkeit von der Zeit zwischen Abgabe des Ultraschallimpulses und Eintritt des Echos zu detektieren.

Darüber hinaus kann der Prüfkopf mit einer Fläche von 1 bis 900 mm$^2$, bevorzugt 4 bis 100 mm$^2$, besonders bevorzugt 8 bis 25 mm$^2$, insbesondere 9 bis 15 mm$^2$, auf der ersten Oberfläche des Vorlaufkeils anliegen (und auch mit einer Fläche solchen Ausmaßes an den Prüfling anlegbar sein).

Der Vorlaufkeil kann ein Material enthalten oder daraus bestehen, in dem sich Schall mit einer kleineren Geschwindigkeit ausbreitet als im Material des Gegenstands, bevorzugt ein Material enthalten oder daraus bestehen, in dem sich Schall mit $\leq$ 80%, besonders bevorzugt $\leq$ 60%, insbesondere $\leq$ 50%, der Geschwindigkeit ausbreitet, mit der sich Schall im Material des Gegenstands ausbreitet. Ferner kann der Vorlaufkeil einen Kunststoff, bevorzugt einen inelastischen Kunststoff, besonders bevorzugt einen Kunststoff ausgewählt aus der Gruppe gestehend aus PMMA, Hart-PVC, POM, Polystyrol und Mischungen und Kombinationen hiervon enthalten oder daraus bestehen.

In einer bevorzugten Ausgestaltungsform enthält die Prüfkopfzange eine Recheneinheit, die dazu konfiguriert ist,

i) eine Laufzeit von Ultraschall zu bestimmen, bevorzugt in der Einheit "samples" oder "$\mu$s"; und/oder
ii) eine Signalhöhe von Ultraschall zu bestimmen, bevorzugt in der Einheit "Spannung" oder normiert auf "100% Bildschirmhöhe"; und/oder
iii) eine Anwesenheit eines Risses in dem Gegenstand zu bestimmen. Bevorzugt ist die Recheneinheit zu allen dieser drei Bestimmungen konfiguriert.

Die Prüfkopfzange kann eine Anzeigeneinheit enthalten, die dazu konfiguriert ist,

i) eine Laufzeitbestimmung von Ultraschall anzuzeigen, bevorzugt in der Einheit "samples" oder "$\mu$s";
ii) eine Signalhöhe von Ultraschall anzuzeigen, bevorzugt in der Einheit "Spannung" oder normiert auf "100% Bildschirmhöhe"; und/oder
iii) eine Anwesenheit eines Risses in dem Gegenstand anzuzeigen. Bevorzugt ist die Anzeigeeinheit zu allen dieser drei Anzeigen konfiguriert.

Ferner kann die Anzeigeeinheit dazu konfiguriert sein, einen abgegebenen Ultraschallimpuls und empfangene Ultraschallechos (z.B. in gleichgerichteter Form) über die Ultraschallaufzeit darzustellen. Da die Ultraschallaufzeit proportional des Abstandes zwischen dem Prüfkopf (Schwinger) und dem Gegenstand (Reflektor) ist, ermöglicht die Anzeige der Ultraschalllaufzeit eine Aussage über die Lage und Größe eines möglichen Risses innerhalb des Gegenstands (Prüflings). Bevorzugt ist daher die Anzeigeeinheit dazu konfiguriert, eine Lage und/oder eine Größe von Rissen in dem Prüfling anzuzeigen.

In einer bevorzugten Ausgestaltungsform weist die Prüfkopfzange ein Reservoir auf, das ein Koppelmedium, bevorzugt Wasser, enthält, wobei das Reservoir besonders bevorzugt fluidisch, ganz besonders bevorzugt über mindestens eine Schlauchverbindung und/oder mindestens einen Kanal, mit der zweiten Oberfläche des Vorlaufkeils verbunden ist. Diese Ausgestaltungsform ist mit dem Vorteil verbunden, dass das Koppelmedium bereits in der Prüfkopfzange enthalten ist und dem Benutzer ein einfacheres und komfortableres Auftragen des Koppelmediums zwischen die zweite Oberfläche des Keils und die flache Oberfläche zwischen zwei Kanten des zu prüfenden Gegenstands ermöglicht. Natürlich kann das Koppelmedium auch vorab als Gel, z.B. durch Ausdrücken aus einer Tube, die das Gel enthält, auf die Pressflächen (z.B. 6 Pressflächen) des Pressverbinders appliziert werden.

Der zu prüfende Gegenstand (Gegenstand) kann einen inneren Hohlraum enthalten, der bevorzugt mindestens eine elektrische Leitung aufweist. Ferner kann der Gegenstand durch Einwirken mechanischer Kraft in Richtung der Längsachse des Gegenstands verpresst worden sein. Zudem kann der Gegenstand ein Material enthalten oder aus einem Material bestehen, in dem bei einer Temperatur von 20°C die longitudinale Schallgeschwindigkeit in einem Bereich von 4000 m/s bis 5000 m/s, bevorzugt in einem Bereich von 4600 bis 4800 m/s, liegt, wobei das Material besonders bevorzugt Kupfer oder eine Kupferlegierung enthält oder daraus besteht. Der Gegenstand ist bevorzugt als Pressverbinder ausgestaltet, besonders bevorzugt als Pressverbinder von elektrischen Leitungen, ganz besonders bevorzugt als Pressverbinden von elektrischen Leitungen für Züge, Straßenbahnen und/oder Seilbahnen.

Der Zangenkopf der Prüfkopfzange kann mindestens zwei Prüfköpfe zur Abgabe und Detektion von Ultraschall und mindestens zwei Vorlaufkeile enthalten, wobei der Zangenkopf bevorzugt jeweils mindestens drei, besonders bevorzugt jeweils mindestens vier, ganz besonders bevorzugt jeweils mindestens fünf, insbesondere jeweils mindestens sechs Prüfköpfe zur Abgabe und Detektion von Ultraschall und Vorlaufkeile enthält. Der Vorteil an einer Prüfkopfzange mit mehreren Prüfköpfen und Vorlaufkeilen ist, dass bei Prüflingen, die mehrere flache Oberflächen zwischen zwei Kanten aufweisen, mit hoher Sensitivität alle Riss-anfälligen Flächen im Inneren des Prüflings in gleichzeitig in einem Messvorgang auf die Anwesenheit von Rissen detektiert werden können. Enthielte die Prüfkopfzange nur einen Prüfkopf mit Vorlaufkeil, müssten beispielsweise bei einem Gegenstand mit sechs Kanten (z.B. ein gewöhnlicher Pressverbinder), sechs Einzelmessungen getätigt werden, wobei der Prüfkopf mit Vorlaufkeil schrittweise zu allen sechs flachen Oberflächen zwischen jeweils zwei Kanten geführt werden müsste. Folglich erlaubt die beschriebene, bevorzugte Ausgestaltungsform eine zeiteffizientere Prüfung, da kein manuelles Umsetzen der Prüfzange erfolgen muss.

Die jeweils eine erste Oberfläche jedes Vorlaufkeils kann hierbei an jeweils einem Prüfkopf anliegen und jeweils eine zweite Oberfläche jedes Vorlaufkeils kann in einem Winkel $\alpha$ zur jeweils ersten Oberfläche des jeweiligen Vorlaufkeils angeordnet sein, wobei die zweite Oberfläche jedes Vorlaufkeils jeweils dazu geeignet ist, durch ein Schließen der Prüfkopfzange an jeweils einer flache Oberfläche zwischen zwei Kanten des Gegenstands angelegt zu werden.

Ferner wird erfindungsgemäß ein Kit bereitgestellt, der eine erfindungsgemäße Prüfkopfzange und ein Koppelmedium zur Einkopplung von Ultraschall von dem Vorlaufkeil in den Gegenstand enthält. Bei dem Koppelmedium kann es sich um eine Flüssigkeit (z.B. Wasser) oder um ein Gel handeln.

Zudem wird die Verwendung einer erfindungsgemäßen Prüfkopfzange oder eines erfindungsgemäßen Kits zur Ultraschall-Riss-Detektion in einem Gegenstand mit mindestens drei Kanten entlang einer Längsachse vorgeschlagen. Die Prüfkopfzange kann grundsätzlich zur Prüfung von, bevorzugt länglichen, Gegenständen jeglicher Art verwendet werden. Bei dem Gegenstand (Prüfling) handelt es sich bevorzugt um einen Pressverbinder (z.B. Pressverbinder an einer Fahrleitung). Die Prüfkopfzange kann auch zur Prüfung von elektrischen Leitungen, insbesondere Hochspannungsleitungen, verwendet werden. Besonders bevorzugt wird Prüfkopfzange zur Ultraschall-Riss-Detektion in einem Pressverbinder von elektrischen Leitungen für Züge, Straßenbahnen und/oder Seilbahnen verwendet.

Anhand der nachfolgenden Figuren und des nachfolgenden Beispiels soll der erfindungsgemäße Gegenstand näher erläutert werden, ohne diesen auf die hier dargestellten, spezifischen Ausführungsformen einschränken zu wollen.

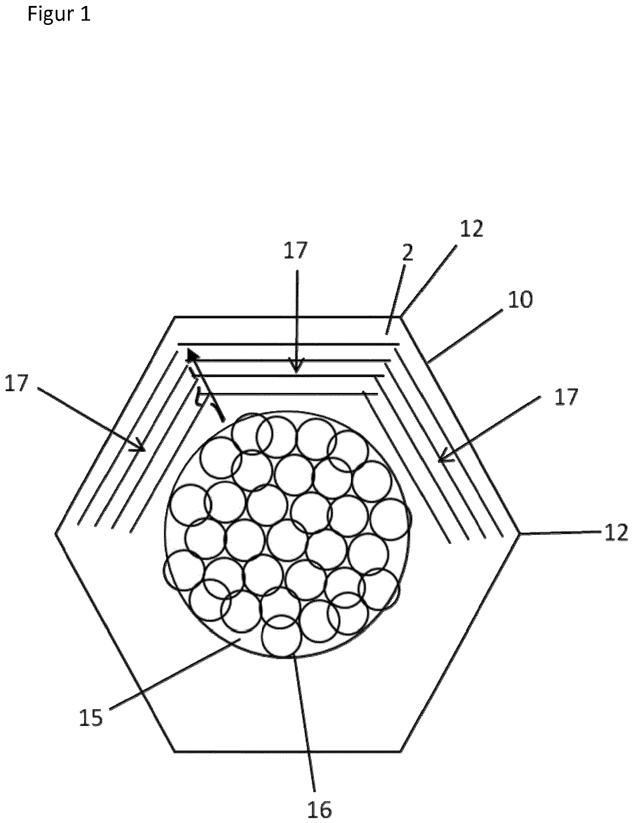

Figur 1 zeigt einen Querschnitt durch einen zu messenden Gegenstand 2 (hier: ein Pressverbinder). Der Gegenstand 2 weist hier einen inneren Hohlraum 15 auf, in dem mindestens eine elektrische Leitung 16 verläuft. Ursprünglich hatte der Gegenstand 2 einen kreisförmigen Querschnitt. Durch Einwirken einer mechanischen Kraft 17 wurde der ursprünglich kreisförmige Querschnitt des Gegenstands 2 in einen sechseckigen Querschnitt (hier: symmetrisch zur mittleren Längsachse) verändert. Es entstanden durch die Einwirkung der mechanischen Kraft 17 insgesamt sechs Kanten 12, wobei jeweils zwei Kanten 12 eine flache Oberfläche 10 entlang der Längsachse des Gegenstands 2 begrenzen.

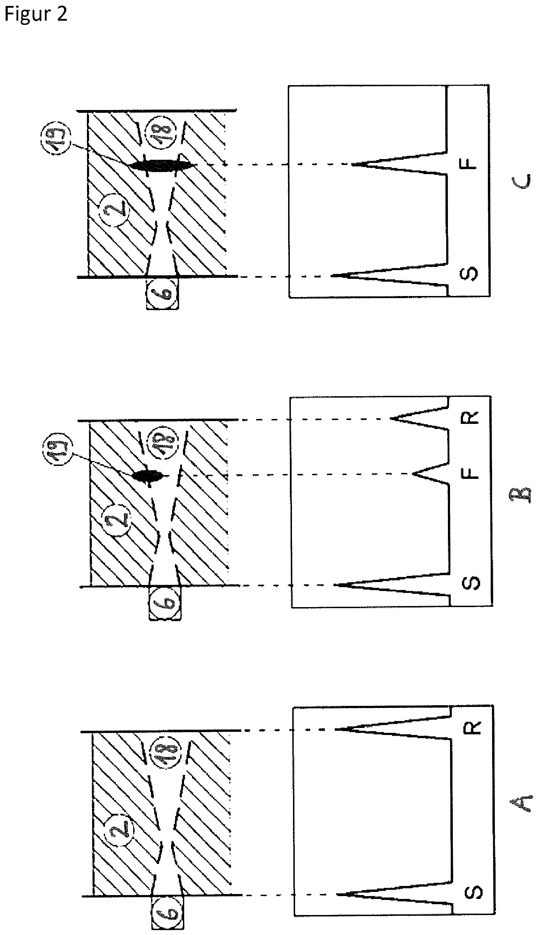

Figur 2 zeigt das Schallfeld bei einer Impuls-Echo-Prüfung, die mit der erfindungsgemäßen Prüfzange durchgeführt werden kann. Über den Prüfkopf 6 der Prüfzange wird ein Sendeimpuls S in den Gegenstand 2 gestrahlt, wodurch im Gegenstand 2 ein Ultraschallfeld 18 entsteht. Der Gegenstand 2 strahlt auch in einem Zustand ohne Fehler 19 (Zustand ohne Riss) ein Rückwandecho R aus (Figur 2A). Ist in dem Gegenstand 2 ein Fehler 19 vorhanden (Zustand mit Riss), so wird von dem Prüfkopf 6 ein Fehlerecho F registriert, das sogar so intensiv sein kann, dass das Rückwandecho R des Gegenstands nicht mehr im Detektionsspektrum auftaucht.

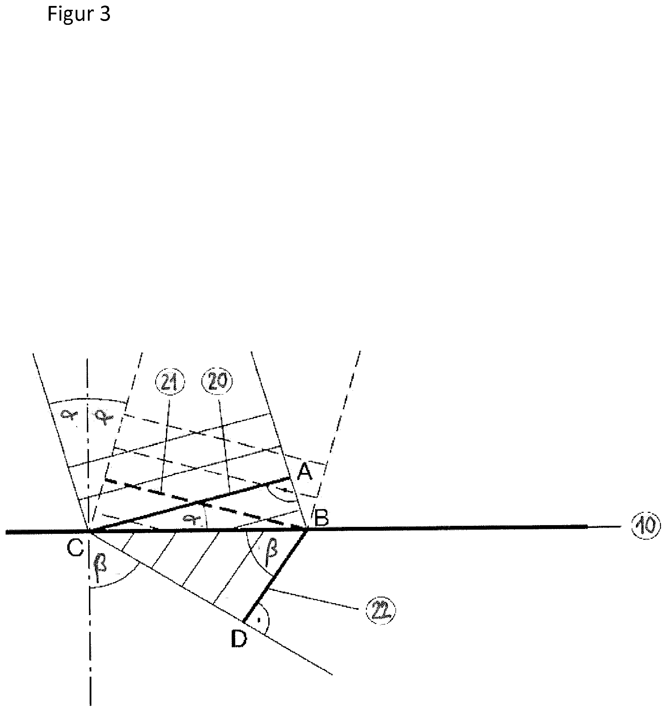

Figur 3 zeigt das Prinzip von Brechung und Reflexion an der Grenzfläche von der zweiten Oberfläche des Vorlaufkeils zu der flachen Oberfläche zwischen zwei Kanten des Gegenstands 10. Das Brechungsgesetz von Snellius wird hierbei analog zur Optik angewendet. Breitet sich eine einfallende Wellenfront 20 in dem Material des Vorlaufkeils auf einer Strecke von Punkt A bis Punkt B aus, so legt sie in der gleichen Zeit im Gegenstand (Prüfling) eine größere Strecke von Punkt C nach Punkt D zurück. Dabei entspricht das Verhältnis der Strecken A-B zu C-D den Verhältnissen der Schallgeschwindigkeiten im Vorlaufkeil und im Prüfling. Berücksichtigt man, dass der als Einfallswinkel bezeichnete Winkel $\alpha$ zwischen der Wellennormalen und der Senkrechten auf der Phasengrenze identisch dem Winkel zwischen Wellenfront und Grenzfläche ist und dass der Ausfallswinkel $\beta$, d.h. der Winkel zwischen der Wellennormalen der gebrochenen Welfenfront und der Grenzfläche, identisch ist mit dem Winkel zwischen Wellenfront und Grenzfläche, so lässt sich das Brechungsgesetz in der Form herleiten:

$$\frac{\sin \alpha}{\sin \beta} = \frac{c_1}{c_2}$$

Die Welle wird bei einem vom schallweichen zum schallharten Medium vom Einfallswinkel weg gebrochen. Neben einer gebrochenen Wellenfront 22 tritt beim Auftreffen der Wellenfront auf die Grenzfläche auch eine reflektierte Wellenfront 21 auf. Da diese die gleiche Ausbreitungsgeschwindigkeit hat wie die einfallende Wellenfront 20, ist in diesem Fall der Reflexionswinkel ebenso groß wie der Einfallswinkel.

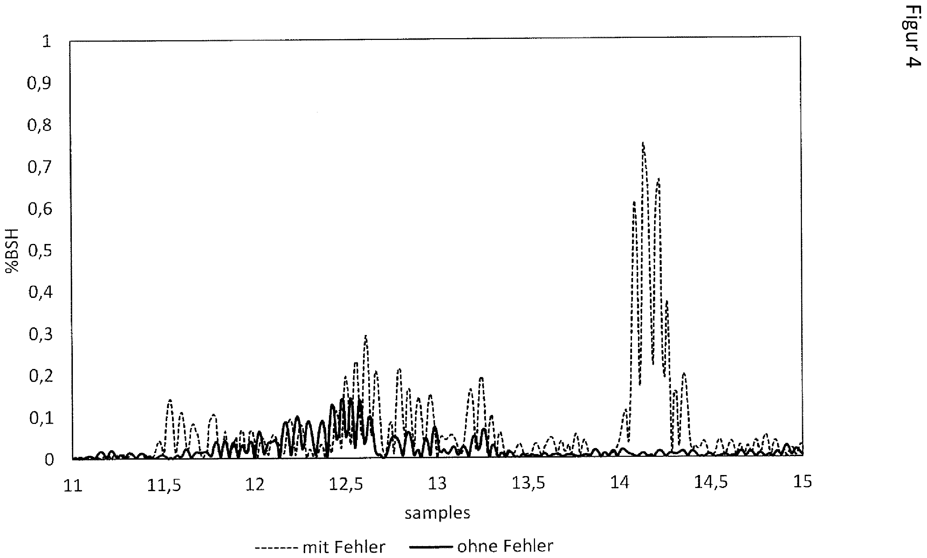

Figur 4 zeigt zwei Laufzeitmessungen, die mit einer erfindungsgemäßen Prüfzange aufgenommen wurde. Die erste Laufzeitmessung wurde mit einem Kupferpressverbinder ohne Fehler (d.h. ohne Risse) als Prüfling durchgeführt und die zweite Laufzeitmessung wurde mit einem Kupferpressverbinder mit Fehlern (d.h. mit Rissen) durchgeführt. Auf der x-Achse sind die "samples" aufgetragen und auf der y-Achse die "%BSH".

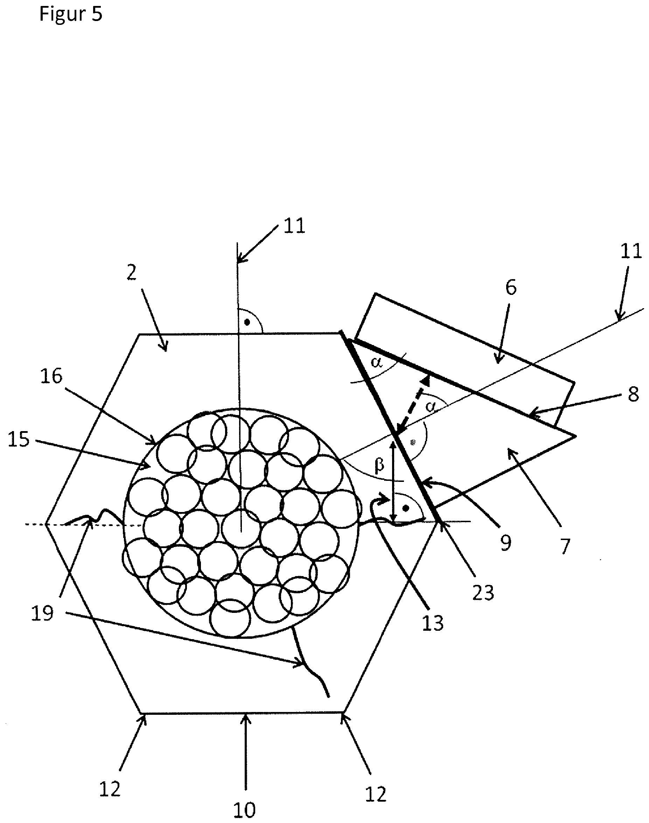

Figur 5 zeigt einen Querschnitt durch einen Prüfling 2, an dessen eine flache Oberfläche 10 zwischen zwei Kanten 12 die zweite Oberfläche 9 eines Vorlaufkeils 7 angelegt ist. Zwischen den beiden Oberflächen 9, 10 befindet sich Wasser (oder eine andere Flüssigkeit bzw. ein Gel) als Koppelmedium 23. Auf der ersten Oberfläche 8 des Vorlaufkeils 7 liegt der Prüfkopf 6 der Prüfkopfzange. Im inneren Hohlraum 15 des Prüflings 2 ist mindestens eine elektrische Leitung 16 angeordnet und es ziehen sich in dieser Ausgestaltungsform Risse 19 vom inneren Hohlraum 15 in Richtung der Kanten 12 des Prüflings 2. In der Darstellung ist zudem ein Lot 11 auf der flachen Oberfläche 10 zwischen zwei Kanten 12 des Prüflings illustriert. Wird vom Schnittpunkt des Lots 11 mit der flachen Oberfläche 10 ein Lot 13 auf die Fläche gefällt, die sich von der mittleren Längsachse des Prüflings 2 zu einer der beiden Kanten 12 des Prüflings 2 erstreckt, so ergibt sich zwischen diesem Lot 13 und dem Lot 11 auf der flachen Oberfläche 10 der Winkel $\beta$. Der Winkel $\alpha$, der die Steigung des Vorlaufkeils definiert, kann dabei leicht über den Zusammenhang sin $\alpha$ = [c(Vorlaufkeil) / c(Gegenstand)] · sin $\beta$ errechnet werden, wobei c(Vorlaufkeil) die Schallgeschwindigkeit in dem Material des Vorlaufkeils ist und c(Prüfling) die Schallgeschwindigkeit in dem Material des Prüflings ist. Es ist hierbei bevorzugt, dass die Schallgeschwindigkeit im Material des Vorlaufkeils 7 kleiner (besonders bevorzugt < 50%) der Schallgeschwindigkeit im Prüfling 2 beträgt, da dies die Detektionssensivität verbessert.

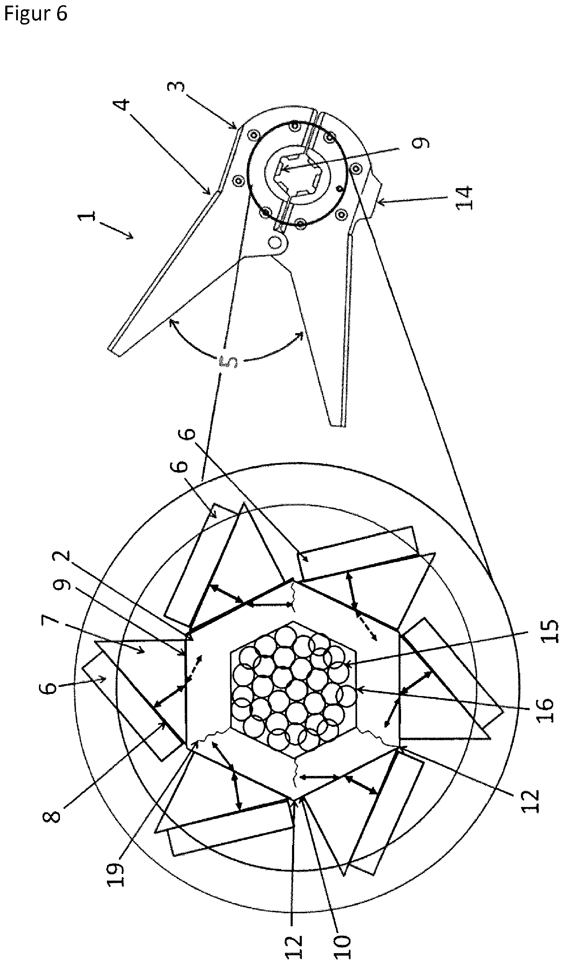

Figur 6 zeigt eine erfindungsgemäße Prüfkopfzange 1, die einen Zangenkopf 3, ein Gelenk 4 und zwei Handgriffe 5 aufweist. Ferner enthält die Prüfkopfzange eine Anzeigeeinheit 14 im Bereich des Zangenkopfs 3. Die hier dargestellte Prüfkopfzange 1 weist sechs Prüfköpfe 6 und sechs Vorlaufkeile auf. Die jeweilige erste Oberfläche 8 der Vorlaufkeile 7 kontaktiert hierbei den jeweiligen Prüfkopf 6 und die zweite Oberfläche 9 der Vorlaufkeile 7 kontaktiert hierbei die jeweiligen flachen Oberflächen 10 zwischen jeweils zwei Kanten 12 des Prüflings 2. Der Prüfling 2 ist in diesem Fall ein Pressverbinder mit einem gleichschenkligen, sechseckigen Querschnitt, d.h. ein Gegenstand, der sechs Kanten aufweist und rotationssymmetrisch zur mittleren Längsachse ist. Im inneren Hohlraum 15 des Prüflings 2 ist mindestens eine elektrische Leitung 16 angeordnet. Vom inneren Hohlraum 15 ziehen sich Risse 19 in Richtung der einzelnen Kanten 12 des Prüflings 2. Für ein senkrechtes Einstrahlen von Ultraschall auf diese Risse 19 werden die Prüfköpfe 6 durch die Vorlaufkeile 7 gegenüber den jeweiligen flachen Oberflächen 10 des Prüflings geneigt. Da in dieser Ausgestaltungsform sechs Prüfköpfe 6 und sechs Vorlaufkeile 7 in der Prüfzange 1 vorhanden sind, können alle sechs Ebenen, in denen Risse 19 auftreten können, gleichzeitig gemessen und auf das Vorhandensein von Rissen 19 geprüft werden. Ein zeitversetztes, schrittweises Abmessen der einzelnen flachen Oberflächen 10 entfällt somit.

**Beispiel** - **Kupferpressverbinder als Gegenstand**

Für Kupferpressverbinder als (länglicher) Gegenstand steht das Verhältnis aus Einschallwinkel $\alpha$ zum Brechungswinkel $\beta$ in Relation zu den akustischen Schallgeschwindigkeiten beider Werkstoffe, d.h. dem Verhältnis von c(Vorlaufkeil) zu c(Pressverbinder), wie folgt:

$$\frac{\sin \alpha}{\sin \beta} = \frac{c_{L,Vorlaufkeil}}{c_{L,Pressverbinder}}$$

Wenn man nun die Schallgeschwindigkeiten beider Materialien kennt bzw. bestimmt hat, und der Winkel $\beta$ (für einen Pressverbinder mit sechs Kanten, d.h. sechseckigem Querschnitt ist $\beta$ = 60°) näherungsweise bekannt ist, kann man auch den Winkel $\alpha$ für die richtige Wahl des Vorlaufkeiles errechnen.

Ist die Wanddicke des Pressverbinders bekannt bzw. gemessen worden, kann man die Laufzeit der Schallwellen anhand der Schallgeschwindigkeiten abschätzen. Mittels einem konventionellem Prüfkopf (z.B. einem Prüfkopf, der Ultraschall mit einer Frequenz von 10 MHz aussendet und empfängt und einen Durchmesser von 3 mm, d.h. eine Fläche von 7 mm$^2$ aufweist) sowie der notwendigen Ultraschallelektronik und Software kann man die Laufzeiten auch bestimmen.

Die Laufzeit der Echosignale kann in "samples" oder auch in "$\mu$s" bestimmt und angezeigt werden. Die Signalhöhe wird als eine Spannung bestimmt, die häufig in der Ultraschallprüfung normiert auf 100% Bildschirmhöhe dargestellt wird. Wie anhand Figur 2 zu sehen ist, erhält man von der Oberfläche des Pressverbinders ein Echo und einige Zeit später ein Signal vom Riss, sollte ein Fehler im geprüften Bereich vorhanden sein.

Bezugszeichenliste

1:       Prüfkopfzange;
2:       Gegenstand bzw. Prüfling (z.B. Pressverbinder);
3:       Zangenkopf der Prüfkopfzange;
4:       Gelenk der Prüfkopfzange;
5:       Handgriffe der Prüfkopfzange;
6:       Prüfkopf der Prüfkopfzange;
7:       Vorlaufkeil der Prüfkopfzange;

8:      erste Oberfläche des Vorlaufkeils;
9:      zweite Oberfläche des Vorlaufkeils;
10:     flache Oberfläche zwischen zwei Kanten des Gegenstands;
11:     Lot auf der flachen Oberfläche zwischen zwei Kanten des Gegenstands;
12:     Kante des Gegenstands;
13:     Lot auf der Fläche, die sich von der mittleren Längsachse des Gegenstands zu einer der beiden Kanten der flachen Oberfläche des Gegenstands erstreckt;
14:     Anzeigeeinheit der Prüfkopfzange;
15:     innerer Hohlraum des Gegenstands;
16:     elektrische Leitung;
17:     mechanische Kraft;
18:     Ultraschallfeld;
19:     Fehler im Bauteil (z.B. Riss);
20:     einfallende Wellenfront;
21:     reflektierte Wellenfront;
22:     gebrochene Wellenfront;
23:     Koppelmedium;
S:      Sendeimpuls des Ultraschalls;
R:      Rückwandecho des Ultraschalls;
F:      Fehlerecho des Ultraschalls;
A:      Punkt bzw. Gerade entlang der ersten Oberfläche des Vorlaufkeils;
B, C:   Punkt bzw. Gerade auf der Oberfläche der flachen Oberfläche des Gegenstands;
D:      Punkt bzw. Gerade innerhalb des Gegenstands.

**Patentansprüche**

1. Prüfkopfzange (1) zur Ultraschall-Riss-Detektion in einem Gegenstand (2) mit mindestens drei Kanten (12) entlang einer Längsachse, enthaltend einen Zangenkopf (3), der über ein Gelenk (4) mit zwei Handgriffen (5) verbunden ist,

   wobei der Zangenkopf (3) einen Prüfkopf (6) zur Abgabe und Detektion von Ultraschall und einen Vorlaufkeil (7) enthält,
   wobei eine erste Oberfläche (8) des Vorlaufkeils (7) an dem Prüfkopf (6) anliegt, und eine zweite Oberfläche (9) des Vorlaufkeils (7) in einem Winkel α zur ersten Oberfläche des Vorlaufkeils (7) angeordnet ist, wobei die zweite Oberfläche (9) dazu geeignet ist, durch ein Schließen der Prüfkopfzange (1) an eine flache Oberfläche (10) zwischen zwei Kanten (12) des Gegenstands (2) angelegt zu werden.

2. Prüfkopfzange (1) gemäß einem der vorhergehenden Ansprüche, **dadurch gekennzeichnet, dass** der Prüfkopf (6)

   i) einen Ultraschallwandler enthält oder daraus besteht, bevorzugt einen Einschwinger-Prüfkopf (6) oder einen Gruppenstrahler; und/oder
   ii) dazu konfiguriert ist, Ultraschall mit einer Frequenz von 1 bis 100 MHz, bevorzugt 2 bis 50 MHz, besonders bevorzugt 5 bis 20 MHz, abzugeben und zu detektieren; und/oder
   iii) mit einer Fläche von 1 bis 900 mm$^2$, bevorzugt 4 bis 100 mm$^2$, besonders bevorzugt 8 bis 25 mm$^2$, insbesondere 9 bis 15 mm$^2$, auf der ersten Oberfläche des Vorlaufkeils (7) anliegt.

3. Prüfkopfzange (1) gemäß einem der vorhergehenden Ansprüche, **dadurch gekennzeichnet, dass** der Vorlaufkeil (7) einen Kunststoff, bevorzugt einen inelastischen Kunststoff, besonders bevorzugt einen Kunststoff ausgewählt aus der Gruppe gestehend aus PMMA, Hart-PVC, POM, Polystyrol und Kombinationen und Mischungen hiervon enthält oder daraus besteht.

4. Prüfkopfzange (1) gemäß einem der vorhergehenden Ansprüche, **dadurch gekennzeichnet, dass** die Prüfkopfzange (1) eine Recheneinheit enthält, die dazu konfiguriert ist,

   i) eine Laufzeit von Ultraschall zu bestimmen, bevorzugt in der Einheit "samples" oder "μs"; und/oder
   ii) eine Signalhöhe von Ultraschall zu bestimmen, bevorzugt in der Einheit "Spannung" oder normiert auf "100% Bildschirmhöhe"; und/oder

iii) eine Anwesenheit eines Risses (19) in dem Gegenstand (2) zu bestimmen.

5. Prüfkopfzange (1) gemäß einem der vorhergehenden Ansprüche, **dadurch gekennzeichnet, dass** die Prüfkopfzange (1) eine Anzeigeneinheit (14) enthält, die dazu konfiguriert ist,

   i) eine Laufzeitbestimmung von Ultraschall anzuzeigen, bevorzugt in der Einheit "samples" oder "μs";
   ii) eine Signalhöhe von Ultraschall anzuzeigen, bevorzugt in der Einheit "Spannung" oder normiert auf "100% Bildschirmhöhe"; und/oder
   iii) eine Anwesenheit eines Risses (19) in dem Gegenstand (2) anzuzeigen.

6. Prüfkopfzange (1) gemäß einem der vorhergehenden Ansprüche, **dadurch gekennzeichnet, dass** die Prüfkopfzange (1) ein Reservoir aufweist, das ein Koppelmedium (23), bevorzugt Wasser, enthält, wobei das Reservoir besonders bevorzugt fluidisch, ganz besonders bevorzugt über mindestens eine Schlauchverbindung und/oder mindestens einen Kanal, mit der zweiten Oberfläche des Vorlaufkeils (7) verbunden ist.

7. Prüfkopfzange (1) gemäß einem der vorhergehenden Ansprüche, **dadurch gekennzeichnet, dass** der Zangenkopf (3) mindestens zwei Prüfköpfe zur Abgabe und Detektion von Ultraschall und mindestens zwei Vorlaufkeile (7) enthält, wobei der Zangenkopf (3) bevorzugt jeweils mindestens drei, besonders bevorzugt jeweils mindestens vier, ganz besonders bevorzugt jeweils mindestens fünf, insbesondere jeweils mindestens sechs Prüfköpfe zur Abgabe und Detektion von Ultraschall und Vorlaufkeile (7) enthält.

8. Prüfkopfzange (1) gemäß Anspruch 7, **dadurch gekennzeichnet, dass** jeweils eine erste Oberfläche (8) jedes Vorlaufkeils (7) an jeweils einem Prüfkopf (6) anliegt und jeweils eine zweite Oberfläche (9) jedes Vorlaufkeils (7) in einem Winkel α zur jeweils ersten Oberfläche des jeweiligen Vorlaufkeils (7) angeordnet ist, wobei die zweite Oberfläche (9) jedes Vorlaufkeils (7) jeweils dazu geeignet ist, durch ein Schließen der Prüfkopfzange (1) an jeweils einer flache Oberfläche (10) zwischen zwei Kanten (12) des Gegenstands (2) angelegt zu werden.

9. Kit enthaltend eine Prüfkopfzange (1) gemäß einem der vorhergehenden Ansprüche und ein Koppelmedium (23) zur Einkopplung von Ultraschall von dem Vorlaufkeil (7) in den Gegenstand (2).

10. Verwendung einer Prüfkopfzange (1) gemäß einem der Ansprüche 1 bis 8 oder eines Kits gemäß Anspruch 9 zur Ultraschall-Riss-Detektion in einem Gegenstand (2) mit mindestens drei Kanten (12) entlang einer Längsachse, wobei es sich bei dem Gegenstand (2) bevorzugt um einen Pressverbinder handelt, besonders bevorzugt einen Pressverbinder von elektrischen Leitungen (16), insbesondere einen Pressverbinder von elektrischen Leitungen (16) für Züge, Straßenbahnen und/oder Seilbahnen.

## Claims

1. Probe pliers (1) for ultrasonic crack detection in an object (2) having at least three edges (12) along a longitudinal axis, comprising a pliers head (3) which is connected via a joint (4) to two hand grips (5),

   wherein the pliers head (3) comprises a test head (6) for emitting and detecting ultrasound, and a lead wedge (7), wherein a first surface (8) of the lead wedge (7) rests against the test head (6), and a second surface (9) of the lead wedge (7) is arranged at an angle α to the first surface of the lead wedge (7),
   wherein the second surface (9) is suitable for being applied, by closing the probe pliers (1), against a flat surface (10) between two edges (12) of the object (2).

2. The probe pliers (1) according to any one of the preceding claims, **characterized in that** the test head (6)

   i) comprises or consists of an ultrasonic transducer, preferably a transducer probe (6) or a group emitter; and/or
   ii) is configured to emit and to detect ultrasound with a frequency of from 1 to 100 MHz, preferably 2 to 50 MHz, particularly preferably 5 to 20 MHz; and/or
   iii) rests on the first surface of the lead wedge (7) with an area of from 1 to 900 mm$^2$, preferably 4 to 100 mm$^2$, particularly preferably 8 to 25 mm$^2$, in particular 9 to 15 mm$^2$.

3. The probe pliers (1) according to any one of the preceding claims, **characterized in that** the lead wedge (7) comprises or consists of a plastic, preferably an inelastic plastic, particularly preferably a plastic selected from the group consisting of PMMA, hard PVC, POM, polystyrene and combinations and mixtures thereof.

4. The probe pliers (1) according to any one of the preceding claims, **characterized in that** the probe pliers (1) comprise a computing unit which is configured

 i) to determine a propagation time of ultrasound, preferably in the unit of "samples" or "$\mu$s"; and/or
 ii) to determine a signal level of ultrasound, preferably in the unit "voltage" or standardized to "100% screen height"; and/or
 iii) to determine the presence of a crack (19) in the object (2).

5. The probe pliers (1) according to any one of the preceding claims, **characterized in that** the probe pliers (1) comprise a display unit (14) which is configured

 i) to display a propagation time determination of ultrasound, preferably in the unit "samples" or "$\mu$s";
 ii) to display a signal level of ultrasound, preferably in the unit "voltage" or standardized to "100% screen height"; and/or
 iii) to display the presence of a crack (19) in the object (2).

6. The probe pliers (1) according to any one of the preceding claims, **characterized in that** the probe pliers (1) have a reservoir which comprises a coupling medium (23), preferably water, wherein the reservoir is connected particularly preferably fluidically, very particularly preferably via at least one hose connection and/or at least one channel, to the second surface of the lead wedge (7).

7. The probe pliers (1) according to any one of the preceding claims, **characterized in that** the pliers head (3) comprises at least two test heads for emitting and detecting ultrasound and at least two lead wedges (7), wherein the pliers head (3) preferably comprises at least three, particularly preferably at least four, very particularly preferably at least five, in particular in at least six test heads, for emitting and detecting ultrasound, and lead wedges (7), respectively.

8. The probe pliers (1) according to claim 7, **characterized in that**, respectively, a first surface (8) of each lead wedge (7) rests against a test head (6) and a second surface (9) of each lead wedge (7) is arranged at an angle $\alpha$ to the first surface of the respective lead wedge (7), wherein the second surface (9) of each lead wedge (7) is respectively suitable to be applied, by closing the probe pliers (1), against a respective flat surface (10) between two edges (12) of the object (2).

9. A kit comprising probe pliers (1) according to any one of the preceding claims and a coupling medium (23) for coupling ultrasound from the lead wedge (7) into the object (2).

10. Use of probe pliers (1) according to any one of claims 1 to 8, or of a kit according to claim 9, for ultrasonic crack detection in an object (2) having at least three edges (12) along a longitudinal axis, wherein the object (2) is preferably a press connector, particularly preferably a press connector of electrical lines (16), in particular a press connector of electrical lines (16) for trains, trams and/or cable railways.

**Revendications**

1. Pince de tête de contrôle (1) destinée à la détection de fissures par ultrasons dans un objet (2) ayant au moins trois arêtes (12) le long d'un axe longitudinal, comprenant une tête de pince (3) reliée à deux poignées (5) par le biais d'une articulation (4),

 la tête de pince (3) comprenant une tête de contrôle (6), qui sert à émettre et détecter des ultrasons, et un sabot (7), une première surface (8) du sabot (7) étant en appui contre la tête de contrôle (6) et une deuxième surface (9) du sabot (7) étant disposée selon un angle $\alpha$ par rapport à la première surface du sabot (7), la deuxième surface (9) étant apte à être appliquée, par la fermeture de la pince de tête de contrôle (1), sur une surface plane (10) entre deux arêtes (12) de l'objet (2).

2. Pince de tête de contrôle (1) selon l'une des revendications précédentes, **caractérisée en ce que** la tête de contrôle (6)

i) comprend ou se compose d'un transducteur ultrasonique, de préférence une sonde mono-élément (6) ou une sonde multi-éléments ; et/ou

ii) est configurée pour émettre et détecter des ultrasons à une fréquence de 1 à 100 MHz, de préférence 2 à 50 MHz, de façon particulièrement préférée 5 à 20 MHz ; et/ou

iii) s'appuie sur la première surface du sabot (7) avec une superficie de 1 à 900 mm$^2$, de préférence 4 à 100 mm$^2$, de façon particulièrement préférée 8 à 25 mm$^2$, en particulier 9 à 15 mm$^2$.

3. Pince de tête de contrôle (1) selon l'une des revendications précédentes, **caractérisée en ce que** le sabot (7) comprend ou se compose d'une matière plastique, de préférence une matière plastique inélastique, de façon particulièrement préférée une matière plastique choisie dans le groupe constitué par le PMMA, le PVC dur, le POM, le polystyrène et des combinaisons et mélanges de ceux-ci.

4. Pince de tête de contrôle (1) selon l'une des revendications précédentes, **caractérisée en ce que** la pince de tête de contrôle (1) comprend une unité de calcul qui est configurée pour

i) déterminer une durée des ultrasons, de préférence en unité "échantillons" ou "µs" ; et/ou
ii) déterminer un niveau de signal des ultrasons, de préférence en unité "tension" ou normé à "100 % de hauteur de l'écran" ; et/ou
iii) déterminer la présence d'une fissure (19) dans l'objet (2).

5. Pince de tête de contrôle (1) selon l'une des revendications précédentes, **caractérisée en ce que** la pince de tête de contrôle (1) comprend une unité d'affichage (14) qui est configurée pour

i) afficher une détermination de la durée des ultrasons, de préférence en unité "échantillons" ou "µs" ;
ii) afficher un niveau de signal des ultrasons, de préférence en unité "tension " ou normé à "100 % de hauteur de l'écran" ; et/ou
iii) afficher la présence d'une fissure (19) dans l'objet (2).

6. Pince de tête de contrôle (1) selon l'une des revendications précédentes, **caractérisée en ce que** la pince de tête de contrôle (1) comporte un réservoir qui contient un milieu de couplage (23), de préférence de l'eau, le réservoir étant relié à la deuxième surface du sabot (7) de façon particulièrement préférée fluidiquement, de façon tout particulièrement préférée par le biais d'au moins une liaison par tuyau flexible et/ou au moins un conduit.

7. Pince de tête de contrôle (1) selon l'une des revendications précédentes, **caractérisée en ce que** la tête de pince (3) comprend au moins deux têtes de contrôle servant à émettre et détecter des ultrasons et au moins deux sabots (7), la tête de pince (3) comprenant de préférence au moins trois, de façon particulièrement préférée au moins quatre, de façon tout particulièrement préférée au moins cinq, en particulier au moins six têtes de contrôle servant à émettre et détecter des ultrasons et autant de sabots (7).

8. Pince de tête de contrôle (1) selon la revendication 7, **caractérisée en ce qu'**une première surface (8) de chaque sabot (7) est en appui sur une tête de contrôle (6) respective et une deuxième surface (9) de chaque sabot (7) est disposée respectivement selon un angle α par rapport à chaque première surface du sabot (7) respectif, la deuxième surface (9) de chaque sabot (7) étant respectivement apte à être appliquée, par la fermeture de la pince de tête de contrôle (1), sur une surface plane (10) respective entre deux arêtes (12) de l'objet (2).

9. Kit comprenant une pince de tête de contrôle (1) selon l'une des revendications précédentes et un milieu de couplage (23) pour injecter des ultrasons depuis le sabot (7) dans l'objet (2).

10. Utilisation d'une pince de tête de contrôle (1) selon l'une des revendications 1 à 8 ou d'un kit selon la revendication 9 pour la détection par ultrasons de fissures dans un objet (2) ayant au moins trois arêtes (12) le long d'un axe longitudinal, l'objet (2) étant de préférence un connecteur à compression, de façon particulièrement préférée un connecteur à compression pour câbles électriques (16), en particulier un connecteur à compression pour câbles électriques (16) destinés à des trains, des tramways et/ou des téléphériques.

Figur 1

## Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S58216950 A
- DE 102015219193 A1
- US 20170138908 A1
- DE 7024436 U